# FASCICULE DE BREVET EUROPEEN

(11) **EP 0 554 315 B1**
(45) Date de publication et mention de la délivrance du brevet: **21.12.1994**
(21) Numéro de dépôt: 91918767.4
(22) Date de dépôt: 18.10.1991
(51) Int. Cl.: B01J 2/08, B01J 2/06, B01J 13/04

(54) **PROCEDE ET APPAREIL DE FABRICATION DE PARTICULES SOLIDES A PARTIR D'UN MATERIAU SOLIDIFIABLE EN PRESENCE D'UN AGENT DE SOLIDIFICATION, EN DE BONS RENDEMENTS**
VERFAHREN UND VORRICHTUNG ZUR HERSTELLUNG VON FESTSTOFFTEILCHEN AUS EINEM VERFESTIGBAREN MATERIAL IN GEGENWART EINES VERFESTIGUNGSREAGENS MIT HOHER AUSBEUTE
PROCESS AND APPARATUS FOR OBTAINING HIGH YIELDS OF SOLID PARTICLES FROM A SUBSTANCE CAPABLE OF BEING SOLIDIFIED IN THE PRESENCE OF A SOLIDIFYING AGENT

(30) Priorité: 19.10.1990 FR 9013002
(43) Date de publication de la demande: 11.08.1993
(73) Titulaire: LVMH RECHERCHE, F-92703 Colombes Cédex (FR)
(72) Inventeur: ORS, Patrick, F-51200 Epernay (FR); HENNEQUIN, Dominique, F-51100 Reims (FR); MEYBECK, Alain Les Poissons, F-92400 Courbevoie (FR)
(74) Mandataire: Portal, Gérard
(86) Numéro de dépôt international: FR9100819
(87) Numéro de publication internationale: WO9206779

(56) Documents cités:
- EP-A- 289 648
- DE-C- 551 663
- DE-C- 933 748
- FR-A- 2 111 523
- US-A- 663 093
- US-A- 2 944 986

## Description

La présente invention concerne essentiellement un procédé et un appareil de fabrication de particules solides, à partir d'un matériau ioniquement réticulable en présence d'un agent de réticulation ionique, avec de bons rendements.

On connaît divers procédés de fabrication de particules solides, avantageusement de forme sensiblement sphérique, en constituant ainsi des billes, à partir d'un matériau solidifiable se trouvant à l'origine sous une forme susceptible de s'écouler. Selon la technique antérieure, il est prévu habituellement la génération de gouttes de ce matériau et la solidification de celui-ci par un agent de solidification par mise en contact. Cette technique est en particulier utilisée pour l'immobilisation d'un microorganisme par inclusion dans le matériau. Les microorganismes immobilisés peuvent servir à l'élaboration de boissons fermentées telles que le vin et la bière (FR-A-2 320 349 et FR-A-2 359 202). On a également proposé leur utilisation pour la champagnisation classique (FR-A-2 432 045) ainsi que pour la fabrication de boissons pétillantes à degré d'alcool variable (FR-A-2 601 687). Ces publications, ainsi que d'autres (notamment JP-A-57-150 385 ou EP-A-173 915) ont souligné les performances des réacteurs à cellules immobilisées. Comme autres documents on peut également citer FR-A-2 600 673 ou FR-A-2 586 256 ou encore EP-A-388 588.

Ces techniques ont rendu possible la réalisation des fermentations avec des mélanges de microorganismes de différentes catégories (mélange de bactéries lactiques et mélange de levures).

Cependant, la mise en oeuvre des procédés au niveau industriel s'est heurtée à la difficulté de disposer de quantités suffisantes de particules, produites à cadence élevée à faible coût, et présentant une forme sensiblement sphérique avec un diamètre relativement homogène.

En effet, suivant la plupart des techniques connues, on fait tomber le matériau solidifiable sous forme de gouttes dans un agent de solidification liquide, généralement contenu dans un bac, selon une direction sensiblement verticale. L'inconvénient de ce système est que les gouttes tombant toutes au même endroit de la surface du liquide de solidification, les billes formées ont tendance à s'agglomérer entre elles en un amas indissociable. On a cherché à éviter ce phénomène en produisant dans le bac de réception des gouttes contenant l'agent de solidification liquide, un vortex par agitation circulaire. Toutefois le succès de cette opération n'est que partiel, car, dès que la cadence de chute des gouttes d'une part et la concentration des billes déjà formées dans le liquide de solidification d'autre part sont trop élevées, le phénomène d'agglomération des billes ne peut être totalement évité. Ainsi la cadence de production des billes est généralement limitée, d'autant plus que ces techniques imposent une production en discontinu. Ceci constitue donc un inconvénient grave pour les productions à l'échelle industrielle.

Par ailleurs, par ces techniques connues apparaît un autre inconvénient important en ce qui concerne la régularité de la forme des billes. Lors de l'impact d'une goutte du matériau solidifiable sur la surface de l'agent de solidification liquide, il peut se produire un certain écrasement de cette goutte. Ce phénomène est d'autant plus gênant dans le cas de la préparation de billes multi-couches, telles que celles décrites dans le document EP-A-173 915 à l'exemple 5, page 14, car une irrégularité de l'épaisseur des couches risque de se produire.

Ainsi, la présente invention a pour but de résoudre le nouveau problème technique consistant en la fourniture d'une solution permettant de fabriquer des particules solides à partir d'un matériau ioniquement réticulable par mise en contact avec un agent de réticulation ionique, à cadence élevée, à un faible coût, avec obtention de particules de forme régulière sensiblement sphérique de diamètre moyen relativement homogène.

La présente invention a encore pour but de résoudre le nouveau problème technique énoncé ci-dessus d'une manière particulièrement simple, permettant d'inclure des cellules de micro-organisme à cadence élevée, sans nuire pour autant à l'activité desdites cellules, ce qui constitue une condition essentielle pour l'utilisation de ces particules contenant des microorganismes inclus dans le cadre de procédés de fermentation, et notamment dans le cadre de la préparation de boissons fermentées ou refermentées.

La présente invention a encore pour but de résoudre les nouveaux problèmes techniques énoncés ci-dessus, avec une solution qui permette de régler de manière extrêmement précise le temps de réticulation ionique du matériau, et permettant une grande versatilité dans la fabrication de particules ayant un diamètre variant dans de larges limites.

La présente invention a encore pour but de résoudre les nouveaux problèmes techiques énoncés ci-dessus, avec une solution qui permette la récupération de l'agent de réticulation ionique et son recyclage.

Ces problèmes techniques sont résolus simultanément pour la première fois par la présente invention d'une manière extrêmement simple, peu coûteuse, utilisable à l'échelle industrielle.

Ainsi, selon un premier aspect, la présente invention fournit un procédé de fabrication de particules solides, avantageusement de forme sensiblement sphérique, en constituant ainsi des billes, à partir d'un matériau ioniquement réticulable, se trouvant à l'origine sous une forme liquide, comprenant la génération de gouttes de ce matériau et la solidification de ce matériau par mise en contact avec un agent de réticulation ionique susceptible de s'écouler, caractérisé en ce qu'on fait s'écouler l'agent de réticulation ionique, sous forme d'un lit fluide, on dirige les gouttes du matériau ioniquement réticulable sur ledit lit fluide, pour provoquer leur réticulation ionique, en formant ainsi lesdites particules solides, et on sépare les particules solides ainsi formées de l'agent de réticulation ionique.

Selon un mode de réalisation particulier, les gouttes du matériau ioniquement réticulable sont dirigées sur le lit fluide selon un angle d'incidence inférieur à 90°.

Selon une variante de réalisation, la taille des particules solides est réglée de manière à être comprise entre 10 µm et 4 mm.

Selon une variante de réalisation du procédé selon l'invention, on fait s'écouler l'agent de réticulation ionique sous forme d'un lit fluide s'écoulant sur les parois internes d'une enceinte, on dirige les gouttes du matériau ioniquement réticulable sur ledit lit fluide, et on sépare les particules solides formées de l'agent de réticulation ionique, en bas de, ou après, ladite enceinte.

Selon un autre mode de réalisation du procédé selon l'invention, on fait s'écouler l'agent de réticulation ionique sous forme d'un lit fluide tombant librement en cascade, on dirige les gouttes du matériau ioniquement réticulable sur ledit lit fluide, notamment au voisinage du début de ladite cascade, et on sépare les particules solides formées de l'agent de réticulation ionique, en bas de, ou après, ladite cascade.

Dans le mode de réalisation précédemment décrit, l'angle d'incidence suivant lequel les gouttes du matériau ioniquement réticulable sont dirigées sur ledit lit fluide est de préférence compris entre 5° et 45° et de préférence encore compris entre 15° et 30° environ.

Selon un mode de réalisation particulièrement avantageux de l'invention, on réalise la séparation précitée des particules solides en faisant s'écouler le lit fluide de l'agent de réticulation ionique sur un filtre dont les mailles sont prévues pour retenir les particules solides formées et filtrer l'agent liquide de réticulation ionique. De préférence, Le filtre précité est formé par un tapis roulant foraminé, constitué notamment en toile de fibres de verre, ce qui permet d'évacuer les particules solides formées vers un lieu de traitement ultérieur.

Selon une autre variante de réalisation avantageuse de l'invention, le tapis roulant précité aboutit à L'entrée d'un dispositif de lavage, pour éliminer les traces d'agent de réticulation ionique restantes sur lesdites particules solides.

En particulier, pour la mise en oeuvre du procédé de l'invention, on peut utiliser comme matériau ioniquement réticulable : une solution aqueuse d'un sel alcalin ou d'ammonium d'acide alginique ou d'acide pectique, l'agent de réticulation comprenant alors un cation divalent tel que l'ion calcium, ou bien une solution aqueuse de carraghénane iota ou kappa, et l'agent de réticulation comprenant alors l'ion potassium.

De préférence on utilise une solution aqueuse d'alginate alcalin, tel que l'alginate de sodium ou l'alginate de potassium, l'agent de solidification étant une solution aqueuse de sel de calcium tel que le chlorure de calcium.

Les concentrations respectives des solutions aqueuses d'alginate alcalin et de chlorure de calcium sont décrites dans les documents précités, notamment dans le document FR-A-2 432 045, incorporé ici par référence. Elles sont avantageusement comprises entre 1% et 1,8% en poids pour l'alginate alcalin, et entre 6% et 15% en poids pour le chlorure de calcium.

Selon une caractéristique particulièrement avantageuse, la durée totale de contact des billes d'alginate avec la solution de sel de calcium, est comprise entre 18 et 35 minutes.

Ledit matériau ioniquement réticulable peut contenir divers produits, notamment en suspension ou en solution, tels que des macromolécules naturelles, en particulier des enzymes, des arômes, des cellules vivantes.

Selon une variante de réalisation particulière, le matériau ioniquement réticulable contient un micro-organisme, notamment un micro-organisme de fermentation, ou des cellules vivantes animales ou végétales, ledit matériau ioniquement réticulable étant un matériau compatible avec un milieu de fermentation, en particulier un milieu de fermentation alcoolique du domaine de l'oenologie, de préférence constitué par du vin, pour la production de produits mousseux ou effervescents, en particulier du champagne.

Selon un mode de réalisation particulier de l'invention, le micro-organisme est une levure, en particulier du genre Saccharomyces, Schizosaccharomyces.

Selon encore une autre variante de réalisation avantageuse du procédé selon l'invention, on prépare un gel ayant une structure dite "double couche" comprenant une couche interne, ou noyau, de gel contenant les cellules ou micro-organismes et une couche externe, ou enveloppe, de gel sensiblement exempte de micro-organismes. L'épaisseur de la couche externe ou enveloppe, dans le cas de billes "double couche" ayant un diamètre extérieur d'environ 2 mm après réticulation, est avantageusement inférieure à 0,8 mm.

Pour obtenir des particules ayant une structure double couche, on peut utiliser les procédés antérieurement connus, tels que décrit par exemple dans le document JP-A-57 -150 385 précédemment cité, en utilisant de préférence le procédé décrit dans ce document qui consiste à former la couche externe ou enveloppe avec une solution gélifiable. On peut également utiliser la technique décrite dans Le document US-A-4 386 895 ou US-A-3 396 116, ou encore EP-A-0 140 336 ou US-A-3 015 128 ou US-A-3 310 612 ou encore les techniques de préparation d'inclusion décrites dans un article de P.G. Krouvel dans Biotechnology and Bioengineering (1980), volume 22, page 681 ou le document Microcapsules processing and technology (Asaji Kondo) 1979, pages 62 à 66.

Selon une autre caractéristique avantageuse du procédé selon l'invention, on réalise un recyclage de l'agent de réticulation ionique par circulation en circuit fermé avec éventuellement ajout d'agent frais de réticulation ionique et/ou séparation d'impuretés.

La taille des particules solides obtenues par la mise en oeuvre de L'invention peut varier dans une large gamme, à savoir de quelques micromètres à quelques millimètres, et dépend essentiellement de la viscosité du matériau ioniquement réticulable, de sa pression d'alimentation et du mode de génération des gouttes, en particulier du diamètre de l'orifice du dispositif de génération des gouttes. L'homme de l'art comprendra aisément que les particules les plus fines seront obtenues par pulvérisation du matériau ioniquement réticulable à l'intérieur de l'enceinte précitée, alors que les plus grosses particules seront de préférence obtenues au moyen d'une buse laissant s'écouler goutte à goutte le matériau ioniquement réticulable. Plus précisément, la taille des particules solides sera réglée de manière à être comprise entre environ 10µm et 4 mm.

Dans le cas des billes contenant des cellules ou des micro-organismes tels que des levures, la taille de celle-ci sera réglée pour se situer de préférence entre 1,5 mm et 3 mm après réticulation.

Dans le cas des billes destinées à être incorporées dans des compositions cosmétiques destinées notamment aux soins ou au maquillage de la peau telles que des émulsions, des gels, des rouges à lèvres, on utilise avantageusement des billes de petites tailles, de préférence entre 10µm et 200µm.

Selon un deuxième aspect, la présente invention fournit également un appareil de fabrication de particules solides, avantageusement de forme sensiblement sphérique, en constituant ainsi des billes, à partir d'un matériau ioniquement réticulable se trouvant à l'origine sous forme liquide, comprenant des moyens de génération de gouttes de ce matériau et des moyens de mise en contact de ces gouttes avec un agent de réticulation ionique susceptible de s'écouler, caractérisé en ce qu'il comprend des moyens pour faire s'écouler l'agent de réticulation ionique sous forme d'un lit fluide, réalise un écoulement en chute libre sous forme d'une cascade, lesdits moyens pour générer les gouttes de matériau ioniquement réticulable étant capables de diriger les gouttes sur ledit lit fluide, notamment au voisinage du début de ladite cascade, pour former ainsi des particules solides, et des moyens de séparation des particules solides formées de l'agent de réticulation ionique réalisant une séparation des particules solides de l'agent de réticulation ionique au voisinage du bas de, ou après, ladite cascade.

Selon un mode de réalisation particulier, les gouttes du matériau ioniquement réticulable sont dirigées sur le lit fluide selon un angle d'incidence inférieur à 90°.

Suivant une autre variante avantageuse de réalisation de l'appareil selon l'invention, les moyens de génération des gouttes de matériau ioniquement réticulable comprennent un dispositif de pulvérisation, avantageusement associé à un dispositif d'alimentation sous pression dudit matériau.

Dans le mode de réalisation précédemment décrit, l'angle d'incidence suivant lequel les gouttes du matériau ioniquement réticulable sont dirigées sur ledit lit fluide est de préférence compris entre 5° et 45° et de préférence encore compris entre 15° et 30° environ.

Selon une autre variante de réalisation avantageuse de l'invention, les moyens de séparation précités des particules solides comprennent un filtre dont les mailles sont prévues pour retenir les particules solides formées et filtrer l'agent liquide de réticulation ionique.

Avantageusement, ce filtre est formé par un tapis roulant foraminé constitué notamment d'une toile de fibres de verre, ce qui permet d'évacuer les particules solides vers un lieu de traitement ultérieur.

Selon une autre variante de réalisation avantageuse de l'appareil selon l'invention, le tapis roulant précité aboutit à l'entrée d'un dispositif de lavage pour éliminer des traces d'agent de réticulation ionique restantes sur lesdites particules.

Avantageusement encore le tapis roulant est incliné de façon que le déplacement des particules solides soit légèrement ascensionnel, ce qui favorise l'élimination par gravité de l'agent de réticulation ionique liquide qui s'écoule en sens inverse vers le bas.

Selon un autre mode de réalisation particulièrement avantageux de l'appareil selon l'invention, celui-ci est caractérisé en ce qu'il comprend des moyens de recyclage de l'agent de réticulation ionique notamment par circulation en circuit fermé, avec éventuellement ajout d'agent frais de réticulation ionique et/ou séparation d'impuretés.

Selon une autre caractéristique avantageuse des appareils selon l'invention, les moyens de génération de gouttes comprennent des moyens de génération de gouttes double couche. De préférence ces moyens de génération de gouttes double couche comprennent une buse double constituée de deux tubes concentriques définissant deux orifices concentriques, un orifice interne, un orifice annulaire externe entourant l'orifice interne, et des moyens d'alimentation séparés d'une première solution de matériau ioniquement réticulable contenant de préférence en suspension des cellules vivantes animales ou végétales ou des micro-organismes notamment des micro-organismes de fermentation, depuis une réserve dans ledit orifice interne, des moyens d'alimentation d'une deuxième solution d'un matériau ioniquement réticulable depuis une autre réserve dans l'orifice annulaire externe, ladite deuxième solution étant de préférence exempte de cellule ou de micro-organisme.

Selon une autre caractéristique particulièrement avantageuse de l'appareil selon l'invention, celui-ci est caractérisé en ce qu'il comprend des moyens vibrants pour faciliter et accélérer la formation des gouttes précitées, notamment des moyens vibrants du type décrit dans FR-A-2 336 176.

Selon encore une autre caractéristique avantageuse de l'appareil selon l'invention, celui-ci est caractérisé en ce qu'il comprend le cas échéant des moyens de régulation de température propres à maintenir le matériau ioniquement réticulable à l'état fluide pour permettre la génération de gouttes dudit matériau.

Les particules solides telles que fabriquées par le procédé ou l'appareil, précédemment énoncé, peuvent être utilisées dans un procédé de fermentation, notamment pour l'obtention de vins, en particulier des vins effervescents, notamment du champagne, la taille desdites particules étant de préférence choisie de manière à être comprise entre 1,5 mm et 3 mm après réticulation.

Les particules solides telles que fabriquées par le procédé ou l'appareil, précédemment énoncés, peuvent être utilisées pour la préparation de compositions cosmétiques pour les soins ou le maquillage de la peau, de compositions alimentaires telles qu'oeufs de saumon artificiels, de compositions pour l'agriculture telles que formes enrobées de pesticides, ou semences artificielles par encapsulation ou enrobage d'embryons de végétaux. Selon une variante de réalisation particulière de cette utilisation cosmétique, alimentaire ou agricole, la particule solide se compose d'un support solide tel qu'un pigment ou une microbille, enrobé du matériau ioniquement réticulé. Selon une autre variante de réalisation particulière de cette utilisation cosmétique, alimentaire ou agricole, la particule solide se compose d'un noyau central liquide entouré de matériau ioniquement réticulé préparée en utilisant la buse double précitée dont l'orifice interne reçoit le liquide à enfermer. Ce liquide peut être une solution aqueuse qui est alors entourée de matériau ioniquement réticulier.

En particulier, la taille des particules est choisie de manière à être comprise entre 10µm et 200µm.

On conçoit ainsi que l'invention permet de résoudre les nouveaux problèmes techniques précédemment énoncés d'une manière particulièrement simple, peu coûteuse, utilisable à l'échelle industrielle. En particulier, l'invention permet de fabriquer en continu et à cadence élevée des particules solides de forme régulière sensiblement sphérique, pouvant éventuellement inclure divers produits tels que des pigments, des microbilles, des enzymes, des arômes, des cellules vivantes ou des micro-organismes. De plus la présente invention permet d'éviter que ces particules n'adhèrent entre elles ou sur les parois de l'appareil au moment de leur solidification.

A ce propos, on remarquera que dans le cas de la solidification des billes par réticulation, en particulier dans le cas de formation d'un gel d'alginate de calcium, il a été observé de façon surprenante que le temps très bref, de l'ordre d'une fraction de seconde, du passage dans le lit fluide de la goutte de matériau solidifiable, en l'occurrence une goutte de solution aqueuse d'alginate alcalin, était suffisant pour conférer à la couche extérieure de la bille en formation une dureté suffisante pour lui éviter d'adhérer aux autres billes déjà formées sur lesquelles elle tombe, notamment au niveau des moyens de séparation.

D'autres buts, caractéristiques et avantages de l'invention apparaitront clairement à l'homme de l'art à partir de la description explicative qui va suivre faisant référence à deux modes de réalisation actuellement préférés de l'appareil selon l'invention, permettant de mettre en oeuvre le procédé selon l'invention précédemment décrit, donnés simplement à titre d'illustration et qui ne sauraient donc en aucune façon limiter la portée de l'invention.

Dans les dessins :
- la figure 1 représente schématiquement, selon un premier mode de réalisation un appareil de fabrication de particules solides selon l'invention ; et
- la figure 2 représente également schématiquement, selon un deuxième mode de réalisation, un appareil de fabrication de particules solides selon l'invention.

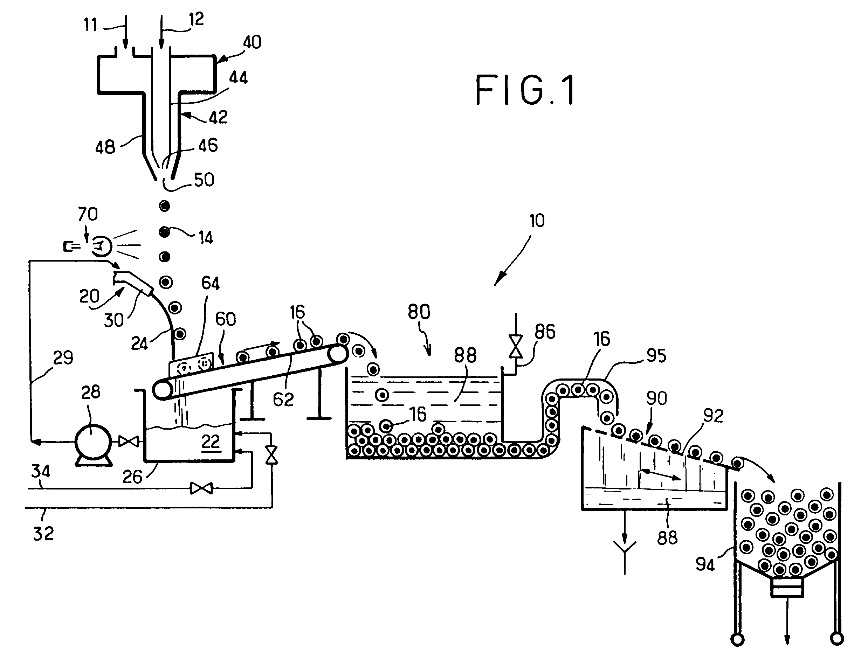

En référence à la figure 1 annexée, un appareil selon l'invention est représenté par le numéro de référence générale 10. Cet appareil permet de fabriquer des particules solides 16, avantageusement de forme sensiblement sphérique, en constituant ainsi des billes, à partir d'un matériau ioniquement réticulable alimenté par exemple par des conduites 11, 12, se trouvant à l'origine sous une forme liquide.

L'appareil selon l'invention est caractérisé en ce que le matériau solidifiable comprend un matériau ioniquement réticulable et en ce qu'il comprend des moyens 20 pour faire s'écouler un agent de réticulation ionique 22 sous forme d'un lit fluide 24 ; des moyens 40 pour faire s'écouler en gouttes 14 le matériau ioniquement réticulable 11, 12, sur ledit lit fluide 24, pour provoquer la réticulation ionique des gouttes 14 pour former ainsi les particules 16 sous forme de billes, ainsi que des moyens 60 de séparation des particules 16 de l'agent de réticulation ionique 22.

Les moyens 20 permettant de faire s'écouler l'agent de réticulation ionique 22 sous forme d'un lit fluide 24, comprennent des moyens de transfert 28, tels qu'une pompe, dudit agent à partir d'un réservoir de stockage 26 par une conduite 29, et par exemple une auge 30 permettant de faire chuter librement en cascade l'agent de réticulation ionique 24, comme représenté.

Il peut être prévu des moyens d'apport 32, 34 en constituants de l'agent de réticulation ionique. L'agent de réticulation ionique pour réaliser la réticulation du matériau ioniquement réticulable étant par exemple l'alginate de sodium ou de potassium, les moyens 32 peuvent amener du chlorure de calcium en solution aqueuse concentrée et les moyens 34 de l'eau de dilution ou les moyens 34 peuvent servir au contraire à vidanger le réservoir 26 pour un remplacement total de l'agent de solidification.

Les moyens 40 pour faire s'écouler en gouttes le matériau ioniquement réticulable 11, 12 comprennent avantageusement une buse double 42 comprenant un conduit interne 44 définissant un orifice interne 46 et un conduit externe 48 définissant un orifice annulaire externe 50 entourant l'orifice interne 46, comme cela est clairement visible à la figure annexée. Des moyens d'alimentation du matériau d'inclusion ioniquement réticulable tel qu'une solution aqueuse d'alginate de sodium ou de potassium, symbolisés par la flèche 12 contenant de préférence en suspension des micro-organismes tels que des levures, depuis une réserve (non représetée) dans l'orifice interne 46 sont prévus, ainsi que des moyens d'alimentation du matériau ioniquement réticulable exempt de cellule ou de micro-organisme, symbolisés par une flèche 11 depuis uneautre réserve (non représentée) dans l'orifice annulaire externe 50, sont également prévus. Les moyens de génération de gouttes 40 comprennent avantageusement des moyens vibrants (non représentés), par exemple tels que décrit dans FR-A-2 330 676, pour faciliter et accélérer la génération des gouttes 14, lorsque l'on souhaite obtenir un débit élevé de ces gouttes. Il peut également être prévu des moyens de mesure de débit des gouttes 14, notamment comprenant un dispositif de mesure optique 70, bien connu de l'homme de l'art.

Les moyens de séparation 60 comprennent de préférence un filtre 62 dont les mailles sont prévues pour retenir les particules solides formées et filtrer l'agent liquide de réticulation ionique ou gélification 22. Ce filtre est de préférence formé par un tapis roulant foraminé, légèrement incliné comme représenté, ce qui permet d'évacuer les particules solides 16 vers un lieu de traitement ultérieur comprenant avantageusement un dispositif de lavage 80 pour éliminer des traces d'agent de réticulation ionique 22 restantes sur les surfaces des particules solides 16. De préférence, les moyens de séparation 60 comprennent également un dispositif 64 destiné à maintenir sur le filtre 62 les billes recueillies à la base du lit fluide 24. Le dispositif 64 est par exemple constitué d'une pièce en forme de U maintenue couchée à proximité du tapis roulant formant filtre et ouvert en direction du déplacement des billes sur le filtre. Le dispositif de lavage 80 peut être quelconque. De tels dispositifs sont bien connus de l'homme de l'art. Des moyens d'alimentation tels que 86 en liquide de lavage 88 sont également prévus. Les particules solides 16 ainsi lavées sont ensuite envoyées par exemple à travers le syphon 95 sur un dispositif d'égouttage 90, par exemple comprenant une grille inclinée fixe 92, pour filtrer le liquide de lavage 88 qui est ensuite évacué par exemple à l'égout, comme cela est représenté symboliquement à la figure annexée. Les particules solides ainsi lavées et filtrées sont ensuite envoyées dans un réservoir de stockage 94, en attendant une utilisation ultérieure de ces particules solides, de préférence essentiellement sphériques, sous forme de billes. Dans le cas où ces particules solides contiennent des cellules de micro-organismes de fermentation, ces billes peuvent être utilisées pour l'obtention de vin, en particulier de vin mousseux, notamment de champagne, par fermentation. Comme il a été dit précédemment, on utilise comme matériau solidifiable, un matériau ioniquement réticulable, par exemple par l'ion calcium. Un matériau ioniquement réticulable préféré est un alginate alcalin, de préférence l'alginate de sodium ou l'alginate de potassium. L'agent de réticulation ionique est alors constitué par une solution aqueuse de chlorure de calcium, comme cela est bien connu à l'homme de l'art.

Un exemple de fabrication industrielle de particules 16 sous forme de billes double couche, dont la couche interne ou noyau contient des cellules de micro-organismes et la couche externe est essentiellement dépourvue de micro-organismes, est maintenant décrit dans l'exemple suivant.

### Exemple de préparation selon l'invention avec l'appareil de la figure 1

On prépare une première solution d'alginate de sodium à 1,5% en poids, en mélangeant 150 g d'alginate de sodium dans 10 l d'eau déminéralisée, dans laquelle on met en suspension les cellules de micro-organismes, par exemple des levures de fermentation pour la fabrication de vins mousseux, telles que des cellules de Saccharomyces Cerivisiae commercialisées par l'Institut Oenologique de Champagne, que l'on amène,comme symbolisé par la flèche 12, dans l'orifice interne 46 des moyens de génération de gouttes 40.

On prépare une deuxième solution de l'alginate de sodium à 1,5% en poids, en mélangeant 150 g d'alginate de sodium pour 10 l d'eau déminéralisée, sans cellule comme symbolisé par la flèche 11, dans l'orifice externe 50 des moyens de génération de gouttes 40.

Par ailleurs, on introduit dans le réservoir 26 l'agent de solidification par réticulation, constitué d'une solution aqueuse de chlorure de calcium à 10% en poids. Cette solution est pompée au moyen de la pompe 28 et s'écoule par l'auge 30 en chute libre sous forme d'une cascade d'une hauteur de 15 cm environ.

La position des moyens 40 de génération de gouttes est réglée de façon à ce que les gouttes tombent au voisinage du point de chute du lit fluide, c'est-à-dire vers la partie supérieure de la cascade, suivant un angle d'incidence compris entre 5° et 45° et de préférence égal à environ 30°.

Dès le contact des gouttes de solution d'alginate de sodium avec la solution de chlorure de sodium, il se produit une rigidification rapide des gouttes en raison d'une réticulation périphérique qui se propage ensuite vers le coeur de la bille. La taille de ces billes est très homogène et se situe à environ 2 mm.

Les billes ainsi formées, sont séparées de l'agent de réticulation 22 par le dispositif de séparation 60, notamment par filtration à l'aide du filtre 62 formé par un tapis roulant foraminé. Il est à noter que pendant le trajet sur la surface des moyens de séparation 60, la réticulation des particules solides 16 se poursuit grâce à la présence de traces d'agent de réticulation à leur surface. Les particules solides 16 sont ensuite transférées dans le dispositif de lavage 80 où elles sont lavées avec un liquide de lavage, tel que de l'eau déminéralisée. La durée qui sépare l'impact des gouttes 14 sur le lit fluide 24, du transfert des particules solides 16 dans le dispositif de lavage 80 est de l'ordre de 25 minutes. Les particules solides lavées 16 sont filtrées sur le dispositif de filtration 90 et sont ensuite dirigées dans le dispositif de stockage 94. On conçoit ainsi que l'appareil selon l'invention permet de fabriquer des particules solides à cadence élevée, selon une procédure qui permet de régler très précisémment le temps de réticulation car on comprend qu'il est très aisé selon l'invention de régler le temps de parcours des gouttelettes 14 depuis l'instant où elles sont mises en contact avec le liquide 24 en haut de la cascade et l'instant où elles aboutissent dans le dispositif de lavage 80. Ce temps de réticulation peut être modifié à volonté notamment en faisant varier la vitesse d'avancement du tapis roulant 62. On comprend ainsi que l'invention permet d'aboutir à des avantages techniques déterminants, par rapport à l'état de la technique antérieure.

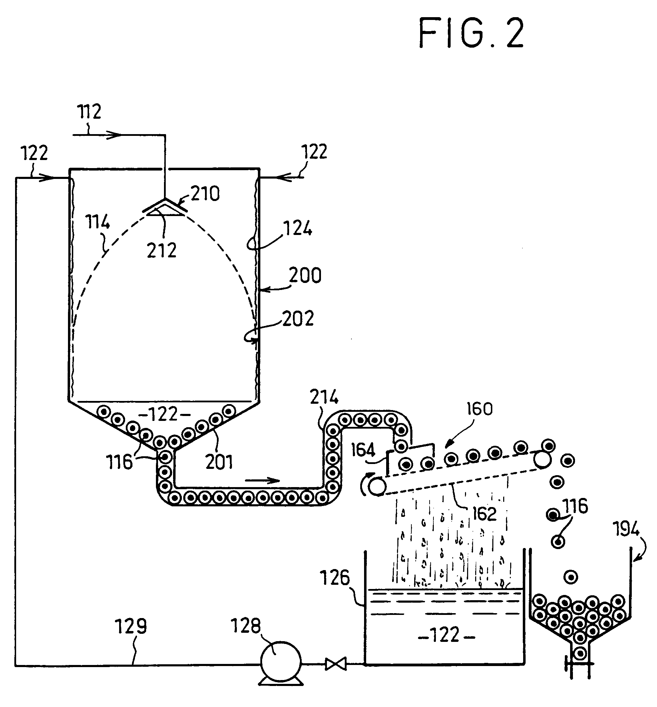

En référence à la figure 2, on a représenté un deuxième mode de réalisation d'un appareil selon l'invention pour lequel on a utilisé les mêmes chiffres de référence augmentés de 100 pour les parties similaires.

Ainsi le matériau ioniquement réticulable est référencé 112. Ce matériau ioniquement réticulable est amené dans une enceinte 200 à l'intérieur de laquelle il est dirigé sous forme de gouttes 114 sur les parois internes 202 de l'enceinte 200, par exemple par l'emploi d'un dispositif d'écoulement ou de pulvérisation 210, capable de diriger à volonté les gouttes 114 contre les parois internes 202 de l'enceinte 200. Ce dispositif d'écoulement ou de pulvérisation 210 peut être conçu pour permettre de régler l'angle d'incidence des gouttes 114 contre les parois internes 202 de l'enceinte 200, ledit angle d'incidence, étant inférieur à 90°. De tels dispositifs d'écoulement ou de pulvérisation 210 sont bien connus à l'homme de l'art.

Par ailleurs, on fait s'écouler l'agent de réticulation ionique 122 sous forme d'un lit fluide ou film 124 sur les parois internes 202 de l'enceinte 200. On peut également recycler de l'agent de réticulation ionique par le conduit 129 de manière similaire au dispositif de recyclage de la figure 1 pour lequel les mêmes numéros de référence ont été utilisés et augmentés de 100.

Selon une variante de réalisation avantageuse, l'enceinte 200 présente une forme sensiblement cylindrique disposée verticalement et dont la partie inférieure est conformée en entonnoir 201 pour recueillir les particules solides 116 dans l'agent de réticulation ionique 122. Ces particules solides 116 dans l'agent de réticulation ionique 122 peuvent être évacuées sous l'effet de la gravité par exemple par un système de siphon 214 pour passer ensuite sur un filtre 162 similaire au filtre 62 de la figure 1 et disposé de manière analogue, en étant par exemple avantageusement formé par un tapis roulant foraminé de manière à séparer l'agent de réticulation ionique 122 et à recueillir les particules solides 116. A proximité du filtre 162 peut être maintenu un dispositif 164 remplissant les mêmes fonctions que le dispositif 64 de la figure 1. Les particules 116 peuvent ensuite passer dans un dispositif de lavage (ici non représenté) similaire au dispositif de lavage 80 de la figure 1 avant de passer sur un dispositif de filtration (également ici non représenté) similaire au dispositif 90 de la figure 1, avant d'être recueilli dans un dispositif de stockage 194 similaire au dispositif 94 de la figure 1.

On obtient ainsi les mêmes avantages techniques que dans le cas du mode de réalisation de la figure 1.

En outre, selon ce mode de réalisation, on peut utiliser un agent de réticulation ionique 122 seul ou avec un support solide, tel qu'un pigment ou une microbille que l'on souhaite enrober par un produit à bas point de fusion qui a tendence à coller aux parois En outre, ce dispositif permet d'utiliser une grande variété de matériaux ioniquement réticulables.

Naturellement, l'invention comprend tous les moyens constituant des équivalents techniques des moyens décrits ainsi que leurs diverses combinaisons.

## Revendications

1. Procédé de fabrication de particules solides (16), avantageusement de forme sensiblement sphérique, constituant ainsi des billes, à partir d'un matériau ioniquement réticulable (11, 12), se trouvant à l'origine sous une forme liquide, comprenant la génération de gouttes (14) de ce matériau et la solidification de ce matériau par mise en contact avec un agent de réticulation ionique (22) susceptible de s'écouler, caractérisé en ce qu'on fait s'écouler l'agent de réticulation ionique (22) sous forme d'un lit fluide (24), on dirige les gouttes (14) du matériau ioniquement réticulable sur le lit fluide (24), pour provoquer leur réticulation ionique en formant ainsi lesdites particules solides (16), et on sépare les particules solides (16) ainsi formées de l'agent de réticulation ionique (en 60).

2. Procédé selon la revendication 1, caractérisé en ce que les gouttes du matériau ioniquement réticulable sont dirigées sur le lit fluide précité selon un angle d'incidence inférieur à 90°.

3. Procédé selon la revendication 1 ou 2, caractérisé en ce que la taille des particules solides est réglée de manière à être comprise entre 10µm et 4 mm.

4. Procédé selon l'une des revendications 1 à 3, caractérisé en ce qu'on fait s'écouler l'agent de réticulation ionique (122) sous forme d'un lit fluide (124) s'écoulant sur les parois internes (202) d'une enceinte (200), on dirige les gouttes (114) du matériau ioniquement réticulable (112) sur ledit lit fluide (124), et on sépare les particules solides (116) formées de l'agent de réticulation ionique (122), en bas de, ou après, ladite enceinte.

5. Procédé selon l'une des revendications 1 à 3, caractérisé en ce qu'on fait s'écouler l'agent de réticulation ionique (22) sous forme d'un lit fluide tombant librement en cascade, on dirige les gouttes (14) du matériau ioniquement réticulable sur ledit lit fluide (24), notamment au voisinage du début de ladite cascade, et on sépare les particules solides (16) de l'agent de réticulation ionique en bas de, ou après ladite cascade.

6. Procédé selon la revendication 5, caractérisé en ce que l'angle d'incidence précité est compris entre 5° et 45° et de préférence encore compris entre 15° et 30°C.

7. Procédé selon l'une quelconque des revendications 1 à 6, caractérisé en ce qu on réalise la séparation précitée des particules solides (16) en faisant s'écouler le lit fluide (24) sur un filtre (62) dont les mailles sont prévues pour retenir les particules solides formées (16) et filtrer l'agent liquide de réticulation ionique (22).

8. Procédé selon la revendication 7, caractérisé en ce que le filtre (61) est formé par un tapis roulant foraminé, constitué notamment en toile de fibres de verre, ce qui permet d'évacuer les particules solides (16) vers un lieu de traitement ultérieur.

9. Procédé selon la revendication 8, caractérisé en ce que le tapis roulant précité aboutit à l'entrée d'un dispositif de lavage (80), pour éliminer les traces d'agent de réticulation ionique restantes sur les parois des particules solides (16).

10. Procédé selon l'une des revendications 1 à 9, caractérisé en ce qu'on utilise comme matériau ioniquement réticulable une solution aqueuse d'un sel alcalin ou d'ammonium d'acide alginique ou d'acide pectique, l'agent de réticulation comprenant alors un cation divalent tel que l'ion calcium, ou bien une solution aqueuse de carraghénane iota ou kappa, et l'agent de réticulation comprenant alors l'ion potassium.

11. Procédé selon la revendication 10, caractérisé en ce que le matériau ioniquement réticulable précité est une solution aqueuse d'alginate alcalin, tel que l'alginate de sodium ou l'alginate de potassium, l'agent de solidification étant une solution aqueuse de sel de calcium telle que le chlorure de calcium.

12. Procédé selon la revendication 11, caractérisé en ce que la concentration desdites solutions aqueuses est respectivement comprise entre 1% et 1,8% en poids d'alginate alcalin et comprise entre 6% et 15% en poids de chlorure de calcium.

13. Procédé selon la revendication 11 ou 12, caractérisé en ce que la durée totale de contact des billes d'alginate avec la solution de sel de calcium est comprise entre 18 et 35 min.

14. Procédé selon l'une quelconque des revendications 1 à 13, caractérisé en ce que le matériau ioniquement réticulable contient un micro-organisme notamment un micro-organisme de fermentation, ou des cellules vivantes animales ou végétales, ledit matériau ioniquement réticulable étant un matériau compatible avec un milieu de fermentation, en particulier un milieu de fermentation alcoolique du domaine de l'oenologie, de préférence constitué par du vin, pour la production de produit mousseux ou effervescent, en particulier du champagne.

15. Procédé selon la revendication 14, caractérisé en ce qu'on génère des gouttes (14) double couche, dont la couche interne contient des cellules de microorganismes et la couche externe est essentiellement exempte desdites cellules.

16. Procédé selon l'une quelconque des revendications 1 à 15, caractérisé en ce qu'on réalise un recyclage de l'agent de réticulation ionique, notamment par circulation en circuit fermé, avec éventuellement ajout d'agent frais de réticulation ionique, et/ou séparation d'impuretés.

17. Appareil de fabrication de particules solides (16), avantageusement de forme sensiblement sphérique, en constituant ainsi des billes, à partir d'un matériau ioniquement réticulable (11, 12), se trouvant à l'origine sous forme liquide, comprenant des moyens (40) de génération de gouttes de ce matériau et des moyens (20) de mise en contact de ces gouttes (14) avec un agent de réticulation ionique susceptible de s'écouler, caractérisé en ce qu'il comprend des moyens (40) pour faire s'écouler l'agent de réticulation ionique (22) sous forme d'un lit fluide (24) s'écoulant en chute libre sous forme d'une cascade, les moyens (40) de génération des gouttes (14) de matériau ioniquement réticulable (11, 12) sont capable de diriger les gouttes (14) sur ledit fluide fluide (24) notamment au voisinage du début de ladite cascade, pour former ainsi des particules solides (16), et des moyens de séparation (60) des particule solide (16) formées de l'agent de réticulation ionique (12) au voisinage du bas de, ou après, ladite cascade.

18. Appareil selon la revendication 17, caractérisé en ce que les gouttes du matériau ioniquement réticulable sont dirigées sur le lit fluide selon un angle d'incidence inférieur à 90°.

19. Appareil selon l'une des revendications 17 à 18, caractérisé en ce que les moyens de génération des gouttes de matériau ioniquement réticulable comprennent un dispositif de pulvérisation (210), avantageusement associé à un dispositif d'alimentation sous pression dudit matériau.

20. Appareil selon la revendication 17, caractérisé en ce que l'angle d'incidence précité est compris entre 5° et 45°, de préférence entre 15° et 30°.

21. Appareil selon l'une quelconque des revendications 17 à 22, caractérisé en ce que les moyens de séparation (60) précités comprennent un filtre (62) dont les mailles sont prévues pour retenir les particules solides (16) formées et filtrer l'agent liquide de réticulation ionique (22).

22. Appareil selon la revendication 21, caractérisé en ce que le filtre précité (62) est formé par un tapis roulant foraminé, constitué notamment en toile de fibres de verre.

23. Appareil selon la revendication 22, caractérisé en ce que le tapis roulant précité aboutit à l'entrée d'un dispositif de lavage (80).

24. Appareil selon la revendication 22 ou 23, caractérisé en ce que le tapis roulant précité est incliné de façon à ce que le déplacement des particules solides soit légèrement ascensionnel, ce qui favorise l'élimination par gravité de l'agent de réticulation ionique liquide qui s'écoule en sens contraire vers le bas.

25. Appareil selon l'une quelconque des revendications 17 à 24, caractérisé en ce qu'il comprend des moyens vibrants pour former les gouttes (14).

26. Appareil selon l'une quelconque des revendications 17 à 24, caractérisé en ce que les moyens de génération de goutte comprennent des moyens de génération de bille double couche, comprenant de préférence une buse double constituée de deux tubes concentriques définissant deux orifices concentriques, un orifice interne, un orifice annulaire externe entourant l'orifice interne, et des moyens d'alimentation séparés d'une première solution de matériau ioniquement réticulable contenant de préférence en suspension des cellules vivantes animales ou végétales ou des microorganismes notamment des micro-organismes de fermentation, depuis une réserve dans ledit orifice interne, des moyens d'alimentation d'une deuxième solution d'un matériau ioniquement réticulable depuis une autre réserve dans l'orifice annulaire externe, ladite deuxième solution étant de préférence exempte de cellules ou de micro-organismes.

27. Appareil selon l'une quelconque des revendications 17 à 25, caractérisé en ce qu'il comprend des moyens de recyclage (28, 29) de l'agent de réticulation ionique (22), notamment par circulation en circuit fermé, avec éventuellement ajout (en 32, 34) d'agent frais et/ou séparation d'impuretés.

## Claims

1. Process for the manufacture of solid particles (16), advantageously of substantially spherical form, thus constituting beads, from an ionically crosslinkable material (11, 12), originally in a liquid form, comprising the generation of drops (14) of this material and the solidification of this material by bringing into contact with an ionic crosslinking agent (22) capable of flowing, characterized in that the ionic crosslinking agent (22) is made to flow in the form of a fluid bed (24), the drops (14) of the ionically crosslinkable material are directed onto the fluid bed (24) in order to cause their ionic crosslinking, thus forming the said solid particles (16), and the solid particles (16) thus formed are separated from the ionic crosslinking agent (in 60).

2. Process according to Claim 1, characterized in that the drops of ionically crosslinkable material are directed onto the abovementioned fluid bed at an angle of incidence of less than 90°.

3. Process according to Claim 1 or 2, characterized in that the size of the solid particles is adjusted so as to be between 10 µm and 4 mm.

4. Process according to one of Claims 1 to 3, characterized in that the ionic crosslinking agent (122) is made to flow in the form of a fluid bed (124) which flows on the inner walls (202) of a chamber (200), the drops (114) of the ionically crosslinkable material (112) are directed onto the said fluid bed (124) and the solid particles (116) formed are separated from the ionic crosslinking agent (122) at the bottom of, or after, the said chamber.

5. Process according to one of Claims 1 to 3, characterized in that the ionic crosslinking agent (22) is made to flow in the form of a fluid bed falling freely as a cascade, the drops (14) of the ionically crosslinkable material are directed onto the said fluid bed (24), especially in the region of the beginning of the said cascade, and the solid particles (16) are separated from the ionic crosslinking agent at the bottom of, or after, the said cascade.

6. Process according to Claim 5, characterized in that the abovementioned angle of incidence is between 5° and 45° and more preferentially between 15° and 30°.

7. Process according to any one of Claims 1 to 6, characterized in that the abovementioned separation of the solid particles (16) is carried out by making the fluid bed (24) flow onto a filter (62) whose meshes are designed to retain the solid particles formed (16) and to filter the liquid ionic crosslinking agent (22).

8. Process according to Claim 7, characterized in that the filter (61) is formed by a perforated conveyer belt, constructed especially of glass fibre cloth, which makes it possible to discharge the solid particles (16) towards a subsequent treatment site.

9. Process according to Claim 8, characterized in that the abovementioned conveyer belt ends at the inlet of a washing device (80) for removing the traces of ionic crosslinking agent remaining on the walls of the solid particles (16).

10. Process according to one of Claims 1 to 9, characterized in that use is made, as ionically cross-linkable material, of an aqueous solution of an alkali metal or ammonium salt of alginic acid or pectic acid, the crosslinking agent then comprising a divalent cation such as the calcium ion, or else an aqueous solution of *iota*- or *kappa*-carrageenan, the crosslinking agent then comprising the potassium ion.

11. Process according to Claim 10, characterized in that the abovementioned ionically crosslinkable material is an aqueous solution of alkali metal alginate, such as sodium alginate or potassium alginate, the solidifying agent being an aqueous solution of a calcium salt such as calcium chloride.

12. Process according to Claim 11, characterized in that the concentration of the said aqueous solutions is respectively between 1% and 1.8% by weight of alkali metal alginate and between 6% and 15% by weight of calcium chloride.

13. Process according to Claim 11 or 12, characterized in that the total contact time of the alginate beads with the calcium salt solution is between 18 and 35 min.

14. Process according to any one of Claims 1 to 13, characterized in that the ionically crosslinkable material contains a microorganism, especially a fermentation microorganism, or living animal or plant cells, the said ionically crosslinkable material being a material compatible with a fermentation medium, in particular an alcoholic fermentation medium from the field of oenology, preferably consisting of wine, for the production of a foamy or effervescent product, in particular champagne.

15. Process according to Claim 14, characterized in that double-layered drops (14) are generated, the inner layer of which contains microorganism cells and the outer layer of which is essentially free of the said cells.

16. Process according to any one of Claims 1 to 15, characterized in that the ionic crosslinking agent is recycled, especially by circulation in a closed circuit, optionally with addition of fresh ionic crosslinking agent and/or separation of impurities.

17. Apparatus for the manufacture of solid particles (16), advantageously of substantially spherical form, thus constituting beads, from an ionically crosslinkable material (11, 12), originally in liquid form, comprising means (40) for generating drops of this material and means (20) for bringing these drops (14) into contact with an ionic crosslinking agent capable of flowing, characterized in that it comprises means (40) for making the ionic crosslinking agent (22) flow in the form of a fluid bed (24) flowing in free fall in the form of a cascade, the means (40) for generating the drops (14) of ionically crosslinkable material (11, 12) are capable of directing the drops (14) onto the said fluid bed (24), especially in the region of the beginning of the said cascade, in order thus to form solid particles (16), and means (60) for separating the solid particles (16) formed from the ionic crosslinking agent (12) in the region of the bottom of, or after, the said cascade.

18. Apparatus according to Claim 17, characterized in that the drops of the ionically crosslinkable material are directed onto the fluid bed at an angle of incidence of less than 90°.

19. Apparatus according to either of Claims 17 and 18, characterized in that the means for generating the drops of ionically crosslinkable material comprise a spraying device (210), advantageously in combination with a device for supplying the said material under pressure.

20. Apparatus according to Claim 17, characterized in that the abovementioned angle of incidence is between 5° and 45°, preferably between 15° and 30°.

21. Apparatus according to any one of Claims 17 to 20, characterized in that the abovementioned separation means (60) comprise a filter (62) whose meshes are designed to retain the solid particles (16) formed and to filter the liquid ionic crosslinking agent (22).

22. Apparatus according to Claim 21, characterized in that the abovementioned filter (62) is formed by a perforated conveyer belt, constructed especially of glass fibre cloth.

23. Apparatus according to Claim 22, characterized in that the abovementioned conveyer belt ends at the inlet of a washing device (80).

24. Apparatus according to Claim 22 or 23, characterized in that the abovementioned conveyer belt is inclined so that the movement of the solid particles is slightly upwards, which promotes the removal by gravity of the liquid ionic crosslinking agent which flows in the opposite direction towards the bottom.

25. Apparatus according to any one of Claims 17 to 24, characterized in that it comprises vibrating means for forming the drops (14).

26. Apparatus according to any one of Claims 17 to 24, characterized in that the means for generating drops comprise means for generating double-layered beads, preferably comprising a twin nozzle consisting of two concentric pipes defining two concentric orifices, an inner orifice and an outer annular orifice surrounding the inner orifice, and separate means for supplying a first solution of ionically crosslinkable material preferably containing, in suspension, living animal or plant cells or microorganisms, especially fermentation microorganisms, from a tank into the said inner orifice and means for supplying a second solution of an ionically crosslinkable material from another tank into the outer annular orifice, the said second solution preferably being free of cells or microorganisms.

27. Apparatus according to any one of Claims 17 to 25, characterized in that it comprises means (28, 29) for recycling the ionic crosslinking agent (22), especially by circulation in a closed circuit, optionally with addition (in 32, 34) of fresh agent and/or separation of impurities.

## Patentansprüche

1. Verfahren zur Herstellung fester Teilchen (16), die vorteilhaft im wesentlichen kugelförmig sind und entsprechend Kugeln darstellen, aus einem ionisch vernetzbaren, anfangs flüssig vorliegenden Material (11, 12)
durch Erzeugung von Tropfen (14) aus diesem Material und Verfestigung des Materials, indem es mit einem fließfähigen Mittel (22) zur ionischen Vernetzung in Kontakt gebracht wird,
**dadurch gekennzeichnet,** daß
das Mittel zur ionischen Vernetzung (22) in Form eines Flüssigkeitsbetts (24) abfließen gelassen wird,
die Tropfen (14) des ionisch vernetzbaren Materials auf das Flüssigkeitsbett (24) gelenkt werden, um ihre ionische Vernetzung unter Bildung der festen Teilchen (16) hervorzurufen, und
die so gebildeten festen Teilchen (16) vom Mittel zur ionischen Vernetzung getrennt werden (in 60).

2. Verfahren nach Anspruch 1,
dadurch gekennzeichnet,
daß die Tropfen des ionisch vernetzbaren Materials unter einem Auftreffwinkel von weniger als 90° auf das Flüssigkeitsbett gelenkt werden.

3. Verfahren nach Anspruch 1 oder 2,
dadurch gekennzeichnet,
daß die Größe der festen Teilchen so eingestellt wird, daß sie 10 µm bis 4 mm beträgt.

4. Verfahren nach einem der Ansprüche 1 bis 3,
dadurch gekennzeichnet, daß
das Mittel zur ionischen Vernetzung (122) in Form eines Flüssigkeitsbetts (124) auf den Innenwänden (202) eines Behälters (200) abfließen gelassen wird, die Tropfen (114) des ionisch vernetzbaren Materials (112) auf das Flüssigkeitsbett (124) gelenkt werden und die mit dem Mittel zur ionischen Vernetzung (122) gebildeten festen Teilchen (116) am Boden oder außerhalb des Behälters abgetrennt werden.

5. Verfahren nach einem der Ansprüche 1 bis 3,
dadurch gekennzeichnet, daß
das Mittel zur ionischen Vernetzung (22) in Form eines frei in Kaskaden fallenden Flüssigkeitsbetts abfließen gelassen wird, die Tropfen (14) des ionisch vernetzbaren Materials auf dieses Flüssigkeitsbett (24), insbesondere in der Nähe des Anfangs der Kaskaden, gelenkt werden und die festen Teilchen (16) vom Mittel zur ionischen Vernetzung am Boden oder außerhalb der Kaskade abgetrennt werden.

6. Verfahren nach Anspruch 5,
dadurch gekennzeichnet,
daß der vorerwähnte Auftreffwinkel 5 bis 45° und vorzugsweise 15 bis 30° beträgt.

7. Verfahren nach einem der Ansprüche 1 bis 6,
dadurch gekennzeichnet,
daß die Abtrennung der festen Teilchen (16) dadurch erreicht wird, daß das Flüssigkeitsbett (24) auf einen Filter (62) abfließt, dessen Maschen dazu vorgesehen sind, die gebildeten festen Teilchen (16) zurückzuhalten und das flüssige Mittel zur ionischen Vernetzung (22) durchlaufen zu lassen.

8. Verfahren nach Anspruch 7,
dadurch gekennzeichnet,
daß das Filter (61) ein foraminiertes, insbesondere aus Glasfasergewebe bestehendes Förderband ist, das die Herausführung der festen Teilchen (16) an einen Ort zur Weiterverarbeitung gestattet.

9. Verfahren nach Anspruch 8,
dadurch gekennzeichnet,
daß das Förderband in den Eingang einer Waschvorrichtung (80) mündet, in der auf der Wandung der festen Teilchen (16) verbliebene Spuren des Mittels zur ionischen Vernetzung beseitigt werden.

10. Verfahren nach einem der Ansprüche 1 bis 9,
dadurch gekennzeichnet,
daß als ionisch vernetzbares Material
eine wässerige Lösung eines Alkali- oder Ammoniumsalzes der Alginsäure oder der Pektinsäure, wobei das Vernetzungsmittel dann ein zweiwertiges Kation, wie z. B. Calcium, enthält, oder
eine wässerige Lösung von 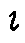 - oder κ-Carrageenan, wobei das Vernetzungsmittel dann Kaliumionen enthält, verwendet wird.

11. Verfahren nach Anspruch 10,
dadurch gekennzeichnet,
daß es sich bei dem ionisch vernetzbaren Material um eine wässerige Lösung eines Alkalialginats, wie z. B. Natriumalginat oder Kaliumalginat, handelt und das Verfestigungsmittel eine wässerige Lösung eines Calciumsalzes, wie z. B. Calciumchlorid, ist.

12. Verfahren nach Anspruch 11,
dadurch gekennzeichnet,
daß die Konzentration der wässerigen Lösungen bei Alkalialginaten 1 bis 1,8 Gew.-% bzw. bei Calciumchlorid 6 bis 15 Gew.-% beträgt.

13. Verfahren nach Anspruch 11 oder 12,
dadurch gekennzeichnet,
daß die Kontaktzeit der Alginatkugeln mit der Lösung des Calciumsalzes insgesamt 18 bis 35 min beträgt.

14. Verfahren nach einem der Ansprüche 1 bis 13,
dadurch gekennzeichnet,
daß das ionisch vernetzbare Material einen Mikroorganismus, insbesondere einen Mikroorganismus zur Fermentation, oder lebende tierische oder pflanzliche Zellen enthält, wobei das ionisch vernetzbare Material mit Fermentationsmedien verträglich ist, insbesondere mit bevorzugt aus Wein bestehenden Medien der alkoholischen Gärung auf dem Gebiet der Önologie zur Herstellung schäumender oder perlender Produkte, insbesondere von Champagner.

15. Verfahren nach Anspruch 14,
dadurch gekennzeichnet,
daß aus einer Doppelschicht bestehende Tropfen (14) erzeugt werden, von denen die innere Schicht Zellen von Mikroorganismen enthält und die äußere Schicht im wesentlichen keine derartigen Zellen enthält.

16. Verfahren nach einem der Ansprüche 1 bis 15,
dadurch gekennzeichnet,
daß das Mittel zur ionischen Vernetzung rückgeführt wird, insbesondere durch Umwälzung in einem geschlossenen Kreislauf, ggfs. mit Zugabe von frischem Mittel zur ionischen Vernetzung und/oder unter Abtrennung von Verunreinigungen.

17. Vorrichtung zur Herstellung fester Teilchen (16), die vorteilhaft im wesentlichen kugelförmig sind und entsprechend Kugeln darstellen, aus einem ionisch vernetzbaren, anfänglich flüssig vorliegenden Material (11, 12), die eine Einrichtung (40) zur Erzeugung von Tropfen aus diesem Material und eine Einrichtung (20), in der diese Tropfen (14) mit einem fließfähigen Mittel zur ionischen Vernetzung in Kontakt gebracht werden, umfaßt,
**dadurch gekennzeichnet,** daß
- sie eine Einrichtung (40) aufweist, mit der man das Mittel zur ionischen Vernetzung (22) in Form eines Flüssigkeitsbetts (24) abfließen lassen kann, wobei das Flüssigkeitsbett (24) in freiem Fall in Form einer Kaskade abfließt,
- die Einrichtung (40) zur Erzeugung von Tropfen (14) aus dem ionisch vernetzbaren Material (11, 12) die Tropfen (14) auf das Flüssigkeitsbett (24), insbesondere in die Nähe des Anfangs der Kaskade, zu lenken vermag, um so feste Teilchen (16) zu erzeugen, und
- sie eine Trenneinrichtung (60) zur Abtrennung der durch das Mittel (22) zur ionischen Vernetzung gebildeten festen Teilchen (16) in der Nähe des Bodens oder außerhalb der Kaskade aufweist.

18. Vorrichtung nach Anspruch 17,
dadurch gekennzeichnet,
daß die Tropfen aus dem ionisch vernetzbaren Material unter einem Auftreffwinkel von weniger als 90° auf das Flüssigkeitsbett gelenkt werden.

19. Vorrichtung nach einem der Ansprüche 17 und 18,
dadurch gekennzeichnet, daß
die Einrichtung zur Erzeugung von Tropfen aus ionisch vernetzbarem Material eine Sprühvorrichtung (210) aufweist, die vorteilhaft mit einer Vorrichtung zur Versorgung mit dem unter Druck stehenden Material verbunden ist.

20. Vorrichtung nach Anspruch 17,
dadurch gekennzeichnet,
daß der Auftreffwinkel 5 bis 45° und vorzugsweise 15 bis 30° beträgt.

21. Vorrichtung nach einem der Ansprüche 17 bis 20,
dadurch gekennzeichnet, daß die Trenneinrichtung (16) ein Filter (62) aufweist, dessen Maschen die gebildeten festen Teilchen (16) zurückhalten und das flüssige Mittel zur ionischen Vernetzung (22) durchlaufen lassen.

22. Vorrichtung nach Anspruch 21,
dadurch gekennzeichnet,
daß das Filter (62) aus einem foraminierten, insbesondere aus Glasfasergewebe bestehenden Förderband besteht.

23. Vorrichtung nach Anspruch 22,
dadurch gekennzeichnet,
daß das Förderband am Eingang einer Waschvorrichtung (80) mündet.

24. Vorrichtung nach Anspruch 22 oder 23,
dadurch gekennzeichnet,
daß das Förderband derart geneigt ist, daß die Förderung der festen Teilchen leicht ansteigend geschieht, wodurch die Entfernung des flüssigen Mittels zur ionischen Vernetzung mit Hilfe der Schwerkraft, das in entgegengesetzter Richtung nach unten abfließt, begünstigt wird.

25. Vorrichtung nach einem der Ansprüche 17 bis 24,
dadurch gekennzeichnet,
daß sie eine Vibrationseinrichtung zur Bildung von Tropfen (14) aufweist.

26. Vorrichtung nach einem der Ansprüche 17 bis 24,
dadurch gekennzeichnet,
daß die Einrichtung zur Erzeugung von Tropfen folgende Einrichtung umfaßt:
Eine Einrichtung zur Erzeugung von Kugeln mit einer Doppelschicht, die bevorzugt eine Doppeldüse aufweist, die aus Rohren gebildet ist, die zwei konzentrische Öffnungen vorsehen, nämlich innere Öffnung und eine ringförmige äußere Öffnung, welche die innere Öffnung umgibt, und mit
einer Einrichtung zur getrennten Einspeisung einer ersten Lösung des ionisch vernetzbaren Materials, die bevorzugt in Suspension lebende tierische oder pflanzliche Zellen oder Mikroorganismen, insbesondere Mikro-organismen für die Fermentation, enthält, in die innere Öffnung, und einer
Einrichtung zur Einspeisung einer zweiten Lösung eines ionisch vernetzbaren Materials aus einem anderen Vorrat in die äußere ringförmige Öffnung, wobei die zweite Lösung bevorzugt frei von Zellen oder Mikroorganismen ist.

27. Vorrichtung nach einem der Ansprüche 17 bis 25,
dadurch gekennzeichnet,
daß sie eine Einrichtung zur Rückführung (28, 29) des Mittels zur ionischen Vernetzung (22), insbesondere durch Umwälzung in einem geschlossenen Kreislauf, enthält, ggfs. mit Zufuhr (in 32, 34) von zusätzlichem Vernetzungsmittel und/oder Abtrennung von Verunreinigungen.
